# EUROPÄISCHE PATENTANMELDUNG

(11) **EP 1 058 103 A2**
(43) Veröffentlichungstag der Anmeldung: **06.12.2000**
(21) Anmeldenummer: 00109159.4
(22) Anmeldetag: 08.05.2000
(51) Int. Cl.: G01L 9/14, G01L 27/00

(54) **Mechano-elektrischer Drucksensor mit magnetfeldempfindlichen Detektor**

(30) Priorität: 11.05.1999 DE 19921401; 22.04.2000 DE 10020064
(71) Anmelder: Mannesmann VDO Aktiengesellschaft, 60388 Frankfurt am Main (DE)
(72) Erfinder: Schmidt, Norbert, 65817 Eppstein (DE); Schimmel, Ralf, 35789 Weilmünster (DE); Acht, Joachim, 65936 Frankfurt (DE)
(74) Vertreter: Klein, Thomas, Dipl.-Ing.

(57) **Zusammenfassung**

Die Erfindung betrifft einen Drucksensor mit einem Sockel (1), welcher einen Druckdurchlass (4) aufweist, der zu einem von einer Membran (6) versperrten Druckraum (5) führt, wobei ein ortsfest gehaltener magnetfeldempfindlicher Detektor (12) im Magnetfeld eines auf der Membran gehaltenen Permanentmagneten (9) angeordnet ist und der Permanentmagnet durch eine druckabhängige Verformung der Membran relativ zum magnetfeldempfindlichen Detektor beweglich ist und der magnetfeldempfindliche Detektor in Abhängigkeit einer durch die Verformung veränderlichen Lage des Magneten zum magnetfeldempfindlichen Detektor ein Ausgangssignal abgibt.

Bei einem Drucksensor, bei dem mit möglichst geringem Aufwand eine Linearität zwischen dem gemessenen Druck und dem Sensorsignal zu erreichen ist und der möglichst zuverlässig zu arbeiten vermag, ist eine Ausgangslage des magnetfeldempfindlichen Detektors vom Permanentmagneten so eingestellt, dass das Ausgangssignal des magnetfeldempfindlichen Detektors sich linear mit dem an der Membran angreifenden Druck ändert.

## Beschreibung

Die Erfindung betrifft einen Drucksensor mit einem Sockel, welcher einen Druckdurchlass aufweist, der zu einem von einer Membran versperrten Druckraum führt, wobei ein ortsfest gehaltener magnetfeldempfindlicher Detektor im Magnetfeld eines auf der Membran gehaltenen Permanentmagneten angeordnet ist und der Permanentmagnet durch eine druckabhängige Verformung der Membran relativ zum magnetfeldempfindlichen Detektor beweglich ist und der magnetfeldempfindliche Detektor in Abhängigkeit einer durch die Verformung veränderlichen Lage des Magneten zum magnetfeldempfindlichen Detektor ein Ausgangssignal abgibt.

Drucksensoren der vorstehenden Art werden zur Prozessüberwachung, in der Regelungstechnik in industriellen Systemen aber auch für unterschiedliche Aufgaben in Kraftfahrzeugen eingesetzt. Es sind verschiedene Typen von Drucksensoren bekannt, die aber für die in der Kraftfahrzeugtechnik üblichen hohen Anforderungsprofile bei hohem Kostendruck nur bedingt geeignet sind. So haben piezoresistive Drucksensoren gegenüber kapazitiven Drucksensoren den Vorteil, billiger zu sein. Sie weisen jedoch eine hohe Medienempfindlichkeit auf. Mechanische Drucksensoren wiederum sind nicht ausreichend zuverlässig und zeigen keine hohe Messgenauigkeit.

Die mit einem Hall-Element arbeitenden Drucksensoren haben den Nachteil, dass das von ihnen erzeugte, elektrische Signal in der Regel nicht linear zum Druck ist, da die verwendeten Hall-Elemente eine unipolare Funktion aufweisen und da die bei Verschiebung des Permanentmagneten relativ zu dem Hall-Element eintretende Magnetfeldänderung nicht linear ist. Wenn man jedoch einen Drucksensor beispielsweise zur Überwachung des Füllstandes eines Kraftstofftanks benutzen will, dann soll eine Linearität zwischen dem Füllstand und der jeweiligen Anzeige gegeben sein. Das erreicht man derzeit durch relativ aufwendige elektronische Schaltungen, durch die die Kennlinie des Hall-Elementes linearisiert wird. Solche Schaltungen sind jedoch teuer und störanfällig.

Der Erfindung liegt das Problem zugrunde, einen Drucksensor der eingangs genannten Art zu entwickeln, bei dem mit möglichst geringem Aufwand eine Linearität zwischen dem zu messenden Druck und dem Sensorsignal zu erreichen ist und der möglichst zuverlässig zu arbeiten vermag.

Dieses Problem wird erfindungsgemäß dadurch gelöst, dass eine Ausgangslage des magnetfeldempfindlichen Detektors zum Permanentmagneten so eingestellt ist, dass das Ausgangssignal des magnetfeldempfindlichen Detektors sich linear mit dem an der Membran angreifenden Druck ändert.

Der Vorteil der Erfindung besteht darin, dass der Arbeitsbereich, des sich im Drucksensor befindlichen Detektors ohne eine aufwendige, externe Korrekturschaltung einfach durch die Wahl der relativen Lage von magnetfeldempfindlichen Detektor und Magnet hinsichtlich der Ausgangscharakteristik eingestellt werden kann. Da jedes Hall-Element eine vorgegebene Kennlinie aufweist, wird in einfacher Weise nur durch die Einstellung der relativen Lage zwischen Detektor und Permanentmagnet ein linearer Abschnitt der Kennlinie ausgewählt. So wird sichergestellt, dass über den gesamten Arbeitsbereich des Drucksensors bei der druckabhängigen Verschiebung des Magneten sich der magnetfeldempfindliche Detektor immer in einem solchen Bereich des Magnetfeldes befindet, dessen Feldstärkeänderung ein Ausgangssignal des Detektors bewirkt, welches dem angreifenden Druck linear ist.

Dadurch kann man den Drucksensor beispielsweise in einem Kraftfahrzeug zur Überwachung des Füllstandes eines Kraftstofftanks einsetzen und dabei ohne aufwendige Korrekturelektronik die erforderliche Linearität zwischen dem Füllstand und dem Zeigerausschlag einer mit dem Drucksensor verbundenen Anzeige erreichen.

Die Ausgangslage läßt sich besonders einfach einstellen, wenn der magnetfeldempfindliche Detektor an eine ein Gehäuse des Drucksensors bildenden Hülse befestigt ist und die Hülse und der den Permanentmagneten tragende Sockel zum Verbinden in einer der Ausgangslage von magnetfeldempfindlichen Detektor und Permanentmagnet entsprechenden Position ausgebildet sind, welche sich bei einer von dem Ausgangssignal des magnetfeldempfindlichen Detektor abhängigen Justage zwischen Hülse und Sockel ergibt.

Bei einem solchen zweiteiligen Drucksensor, bei welchem der magnetfeldempfindliche Detektor und der Permanentmagnet jeweils in einem anderen Teil angeordnet sind, kann man zum Justieren die Hülse relativ zum Sockel bei gleichzeitiger Messung des Ausgangssignales des magnetfeldempfindlichen Detektors verschieben, um so eine geeignete Ausgangslage des Detektors im Magnetfeld des Permanentmagneten einzustellen. Die beiden Gehäuseteile werden dann anschließend, beispielsweise durch Schweißen, in der ermittelten Position verbunden und somit die Ausgangslage von Magnet und Hall-Element unveränderlich arretiert. Gleichzeitig lassen sich Fertigungstoleranzen bei der Herstellung der einzelnen Bauteile des Drucksensors bei dieser Montage mit geringem Aufwand ausgleichen

Vorteilhafterweise sind die Hülse und der Sockel in einer Position verbindbar, in welcher das Ausgangsignal des magnetfeldempfindlichen Detektors dessen Anordnung im magnetischen Nullpunkt des Magnetfeldes des Permanentmagneten anzeigt. Da das Ausgangssignal eines vorgegebenen magnetfeldempfindlichen Detektors in Abhängigkeit von der Feldstärke bekannt ist, ist eine solche Einstellung einfach zu erreichen.

Um eine bipolare Arbeitsweise des Drucksensors zu gewährleisten, wird das Ausgangssignal des magnetfeldempfindlichen Detektors bei einer druckbeaufschlagten Membran bestimmt, wobei der an der Membran angreifende Druck diese um annähernd ihren halben Hub auslenkt.

Alternativ lässt sich eine unipolare Arbeitsweise des Drucksensors einstellen, wenn das Ausgangssignal des magnetfeldempfindlichen Detektors während der Justage im drucklosen Zustand der Membran bestimmt wird.

In einer Weiterbildung ist der magnetfeldempfindliche Detektor seitlich zu dem Permanentmagneten auf einem Träger angeordnet, welcher sich auf einem nach innen gerichteten Flansch der Hülse abstützt. Mit dieser Anordnung läßt sich die bipolare Arbeitsweise des Drucksensors einfach realisieren.

Eine Überdehnung der Membran bei unzulässig hohem Messdruck lässt sich auf einfache Weise dadurch ausschließen, dass der Flansch mit einem den maximalen Hub der Membran begrenzenden Abstand auf der dem Druckraum abgewandten Seite über die Membran ragt. Bei einer solchen Ausführungsform hat der Flansch eine Doppelfunktion. Er legt zum einen die axiale Position des Trägers und damit auch des Detektors fest, zum anderen bildet er mit seiner gegenüberliegenden Fläche einen Anschlag für die Membran.

Konstruktiv kann es von Vorteil sein, wenn der Drucksensor so gestaltet ist, dass der Träger durch eine Niederhaltefeder in Anlage mit dem Flansch gehalten ist.

Zur weiteren Vereinfachung des Aufbaus des Drucksensors trägt es bei, wenn die Niederhaltefeder eine Druckfeder ist, welche einerseits auf dem Träger, andererseits gegen ein die Hülse am dem Sockel gegenüberliegenden Ende verschließendes Kontaktteil abgestützt ist. Die Druckfeder kann als sogenannte Schraubenfeder ausgebildet sein.

Die gewünschte Position des Permanentmagneten relativ zu dem vom Träger gehaltenen magnetfeldempfindlichen Detektor lässt sich dadurch einfach erreichen, dass der Permanentmagnet auf einem Abstandshalter angeordnet ist, welcher mit einer Seite auf der Membran befestigt ist und auf seiner anderen Seite eine Aufnahme für den Permanentmagneten hat.

Die unipolare Arbeitsweise des Drucksensors läßt sich einfach realisieren, wenn der magnetfeldempfindliche Detektor koaxial zu dem Permanentmagneten in dem Träger angeordnet ist und seine sensitive Fläche in Richtung des Permanentmagneten angeordnet ist.

Druckstöße und Pulsationen wirken sich auf die Membran nur begrenzt aus, wodurch sich ihre Lebensdauer wesentlich erhöht, wenn in dem Druckraum zwischen der Membran und der in den Druckraum führenden Druckbohrung eine Prallplatte angeordnet ist.

Die Prallplatte ist besonders einfach zu montieren, wenn sie mit Rastnasen in der Druckbohrung des Sockels gehalten ist.

Die Membran wird in einem besonders hohen Maße vor Druckstößen geschützt, wenn gemäß einer anderen Weiterbildung der Erfindung die Prallplatte ein zur Druckbohrung hin offenes, koaxiales Sackloch hat, welches mit radialen Bohrungen in Verbindung steht, die von dem Sackloch zur Mantelfläche der Prallplatte führen und radial in den Druckraum münden.

Gemäß einer anderen Weiterbildung der Erfindung ist der Drucksensor als Absolutdrucksensor ausgebildet, wenn er zwei Membrane und einen zu evakuierenden Innenraum aufweist. Die beiden Membrane sind an ihren Rändern miteinander verschweißt oder verklebt.

Um das Ausgangssignal des Drucksensors hinsichtlich äußerer Parameter wie beispielsweise der Umgebungstemperatur, die Schwingungsbelastung oder auf die Messmedien einzustellen, ist der magnetfeldempfindliche Detektor über eine im Drucksensor angeordnete programmierbare Signalaufbereitungsschaltung abgleichbar. Diese Signalaufbereitungsschaltung ist vorteilhafterweise im magnetfeldempfindlichen Detektor selbst angeordnet.

Dabei ist ein mit der Signalaufbereitungselektronik verbundener Programmiereingang des magnetfeldempfindlichen Detektors mit einem in dem Kontaktteil des Drucksensors ausgebildeten Ausgangsanschluß des Drucksensors verbunden, wodurch die Programmierung nach Abschluß der Montage des Drucksensors erfolgen kann.

Die Kontaktierung des magnetfeldempfindlichen Detektors ermöglicht zugleich die Anordnung weiterer elektronischer Bauteile, wenn zur Kontaktierung des magnetfeldempfindlichen Detektors eine Leiterplatte vorgesehen ist. Neben der Leiterplatte, die beispielsweise als Flexleiterplatte ausgebildet sein kann, sind auch Kontaktierungen mittels Draht oder Leadframe möglich.

Der Abgleich des Ausgangssignal des magnetfeldempfindlichen Detektors kann einmal durch eine Pulsweitenmodulation der den magnetfeldempfindlichen Detektor versorgenden Betriebsspannung erfolgen.

Die Abgleichinformation kann in einem mit der Signalaufbereitungsschaltung verbundenen nichtflüchtigen Speicher abgelegt werden. Dadurch können die Abgleichinformationen nach bedarf geändert werden. Somit kann ein solcher Drucksensor einfach auf die konkreten Betriebsbedingungen seines Einsatzfalls programmiert werden. Zur unveränderlichen Offseteinstellung kann beispielsweise dem Drucksensor ein Spannungssignal zugeführt werden, wonach Teile seiner Schaltung irreversibel verändert werden und die Abgleichinformation unveränderlich abgelegt ist.

Zum Abgleich des magnetfeldempfindlichen Detektors kann der Masseanschluss des Drucksensors als Ausgangsanschluss genutzt werden.

In einer anderen Ausgestaltung kann der Abgleich über einen digitalen Signalausgang des Drucksensors erfolgen, welcher über eine Datenleitung mit der Signalaufbereitungsschaltung verbunden ist.

Somit sind sowohl analoge als auch digitale Abgleichtechniken bei einem solchen Drucksensor möglich.

Die Erfindung lässt verschiedene Ausführungsformen zu. Zur weiteren Verdeutlichung ihres Grundprinzips sind einige davon in der Zeichnung dargestellt und werden nachfolgend beschrieben.

Die Zeichnung zeigt in
- Fig. 1: einen senkrechten Schnitt durch eine erste Ausführungsform eines Drucksensors nach der Erfindung,
- Fig. 2: eine Anordnung zur Justierung des Hall-Elementes,
- Fig. 3: einen senkrechten Schnitt durch eine zweite Ausführungsform des Drucksensors,
- Fig. 4: einen senkrechten Schnitt durch eine dritte Ausführungsform des Drucksensors,
- Fig. 5: einen senkrechten Schnitt durch einen unteren Bereich einer vierten Ausführungsform des Drucksensors,
- Fig. 6: eine Draufsicht auf eine Prallplatte des Drucksensors nach Figur 5,
- Fig. 7: einen senkrechten Schnitt durch eine fünfte Ausführungsform des Drucksensors.

Gleiche Merkmale sind mit gleichen Bezugszeichen gekennzeichnet.

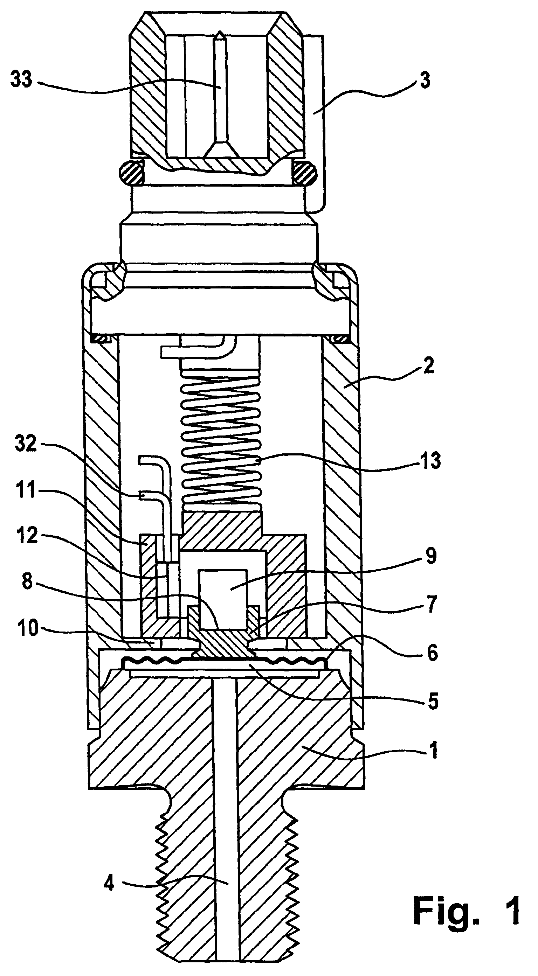

Wie die Figur 1 zeigt, besteht der Drucksensor im wesentlichen aus einem Sockel 1, einer darauf befestigten Hülse 2 und einem die Hülse 2 nach oben hin verschließenden Kontaktteil 3. Der Sockel 1 hat eine koaxiale Druckbohrung 4, die in einen Druckraum 5 führt, der nach oben hin durch eine Membran 6 abgeschlossen ist. Koaxial auf der Membran 6 ist ein Abstandshalter 7 befestigt, der an seiner oberen Seite eine Aufnahme 8 hat, in die ein Permanentmagnet 9 eingesetzt ist.

Die Hülse 2 hat mit geringem Abstand zur Membran 6 einen nach innen gerichteten Flansch 10, auf welchem von oben her ein Träger 11 ruht. Dieser Träger 11 haltert mit geringem Abstand zu dem axial magnetisierten Permanentmagneten 9 ein Hall-Element 12 und wird durch eine als Schraubenfeder ausgebildete Niederhaltefeder 13 auf diesem Flansch 10 gehalten. Diese Niederhaltefeder 13 stützt sich einerseits auf dem Träger 11, andererseits an dem Kontaktteil 3 ab. Anstelle des Hall-Elementes 12 sind magneto-resistive Wandler oder andere magnetfeldabhängige Sensoren einsetzbar.

Gelangt durch die Druckbohrung 4 Druck in den Druckraum 5, dann wölbt sich die Membran 6 nach oben und hebt den Abstandshalter 7 mit dem Permanentmagnet 9 an. Das führt zu einer Magnetfeldänderung am Hall-Element 12, so dass dieses ein der Änderung des Druckes entsprechendes elektrisches Signal erzeugen kann.

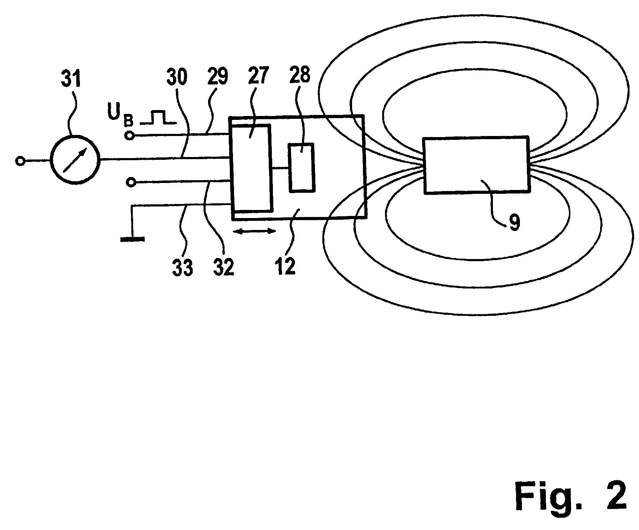

Zur Justage oder Kalibrierung des Drucksensors wird bei der Montage die das Hall-Element 12 führende Hülse 2 mehr oder weniger weit auf dem den Permanentmagneten 9 tragenden Sockel 1 geschoben, wodurch sich die axiale Position des Hall-Elementes 12 relativ zu dem Permanentmagneten 9 verändert. Die axiale Bewegungsrichtung ist in Fig. 2 durch den Pfeil gekennzeichnet.

Während des Montagevorganges wird das Hall-Element 12 mit Betriebsspannung versorgt und das Ausgangssignal des Hall-Gebers gemessen. Da jedes Hall-Element 12 eine eigene Kennlinie aufweist, welche den Zusammenhang zwischen Ausgangssignal und detektierter Feldstärke entspricht, wird durch Verschieben der Hülse 2 und des Sockels 1 gegeneinander die Lage des Hall-Elementes 12 im Magnetfeld des Permanentmagneten 9 verändert. Anhand des Ausgangssignals des Hall-Elementes 12 wird festgestellt, in welcher Position im Magnetfeld sich das Hall-Element 12 befindet.

Das Hall-Element 12 weist dabei eine Signalaufbereitungsschaltung auf, welche mit einem nichtflüchtigen Speicher verbunden ist. Diese Signalaufbereitungselektronik kann sowohl Bestandteil des Hall-Elementes sein oder aber auch als externe Beschaltung innerhalb des Drucksensors mit dem Hall-Element 12 verbunden sein. Bei der vorliegenden Betrachtungsweise soll davon ausgegangen werden, dass die Signalaufbereitungselektronik Bestandteil des Hall-Sensors 12 ist.

Gemäss Figur 2 weist dieses Hall-Element 12 dabei 4 Pins auf, welche im einfachsten Fall mit je einem nach außen geführten Steckerpin 33 des Drucksensors verbunden sind. So ist ein Steckerpin für Masse 33, ein Steckerpin für die Betriebsspannung U_{B} 29, einen Programmierpin 32 sowie einen Datenpin 30 zur Abnahme des Ausgangssignals vorhanden. An den Datenpin 30 ist ein Anzeigegerät (31) angeschlossen, mit dessen Hilfe sich die Änderung der Ausgangsspannung des Hall-Elementes 12 während des Justageprozesses detektiert läßt.

Durch die Justage kann der Drucksensor so kalibriert werden, dass er entweder eine bipolare Arbeitsweise oder eine unipolare Arbeitsweise aufweist.

Zur Einstellung der bipolaren Arbeitsweise wird die Membran 6 mit einem solchen Druck beaufschlagt, dass sie etwa die Hälfte ihres Hubs erreicht. Unter dieser Voraussetzung wird die Hülse 2 mit dem Hall-Element 12 und der Sockel 1 mit dem Permanentmagneten 9 solange gegeneinander verschoben, bis das Ausgangssignal des Hall-Elementes 12 einen solchen Wert erreicht, welcher den magnetischen Nullpunkt des Magnetfeldes entspricht.

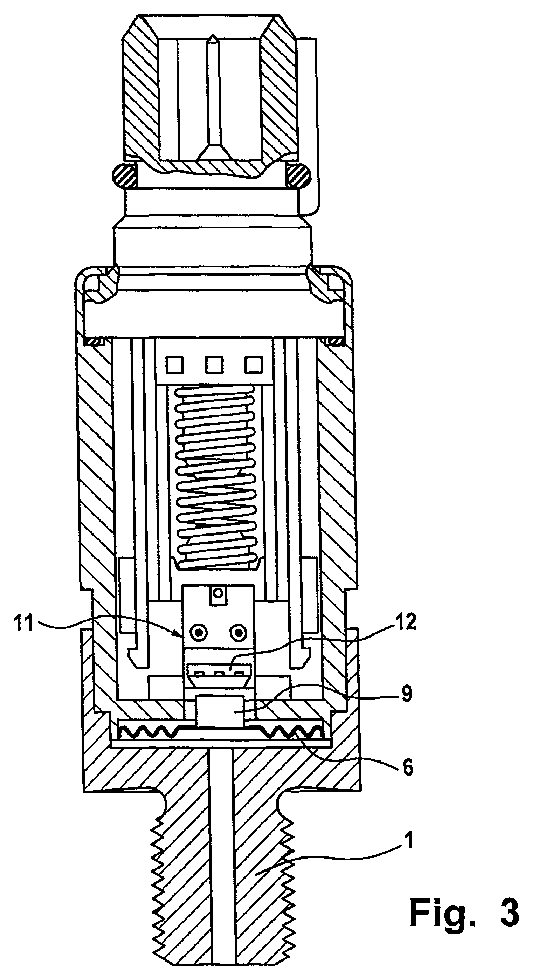

Zur Einstellung der unipolaren Arbeitsweise werden die Hülse 1 und der Sockel 2 drucklos gegeneinander verschoben und hier ebenfalls in einer solchen Lage miteinander verbunden, dass der magnetische Nullpunkt erreicht ist. Für diesen Fall ist gemäß Fig. 3 der Hall-Chip 12 mit seiner magnetfeldsensitiven Fläche nach unten in seinem Distanzstück 2 so montiert, dass in drucklosem Zustand ein definierter axialer Abstand zu den Magneten 9 eingehalten wird. Darüber hinaus ist bei dieser Ausführungsform der Permanentmagnet 9 unmittelbar auf der Membran 6 befestigt. Das Hall-Element 12 ist nicht mehr seitlich des Permanentmagneten 9, sondern koaxial zu ihm im Träger 11 angeordnet.

Die Signalkonditionierung hinsichtlich der Anpassung an die konkreten Umgebungs- und Einsatzbedingungen, wie Messmedium und Temperaturkompensation erfolgt nach Abschluß der Montage des Drucksensors durch Programmierung der Signalaufbereitungsschaltung 27.

Die Programmierung kann in einem einzelnen Spannungssignal bestehen, wodurch eine unwiderrufliche Programmierung eingestellt wird. Zum anderen kann aber auch an dem Programmierpin als Information eine Signalfolge angelegt werden, welche seitens der Signalaufbereitungsschaltung 27 in dem als EEPROM ausgeführten Speicher 28 abgelegt wird. Durch Löschung dieser Codierung im Speicher kann aufgrund sich ändernder Anwendungsfälle eine neue Offseteinstellung des Ausgangssignals vorgenommen werden. Zur Erzeugung der Signalfolge wird die Betriebsspannung U_{B} des Hall-Elementes 12 mit einem pulsweitenmodulierten Signal beaufschlagt.

Die diskutierten Programmiermöglichkeiten lassen sich aber auch durchführen, wenn beispielsweise der Masseanschluss 33 als Programmierpin verwendet wird, so dass auf einen separaten Programmieranschluss verzichtet werden kann. Alternativ kann aber auch der Signalanschluß 30, an welchen das Ausgangssignal abgegriffen wird, als Programmiereingang genutzt werden. Ist der Ausgangspin ein digitaler Signalausgang, so kann mit Hilfe einer bidirektionalen Datenleitung ein definiertes Datenprotokoll an die Signalaufbereitungsschaltung 27 übermittelt werden.

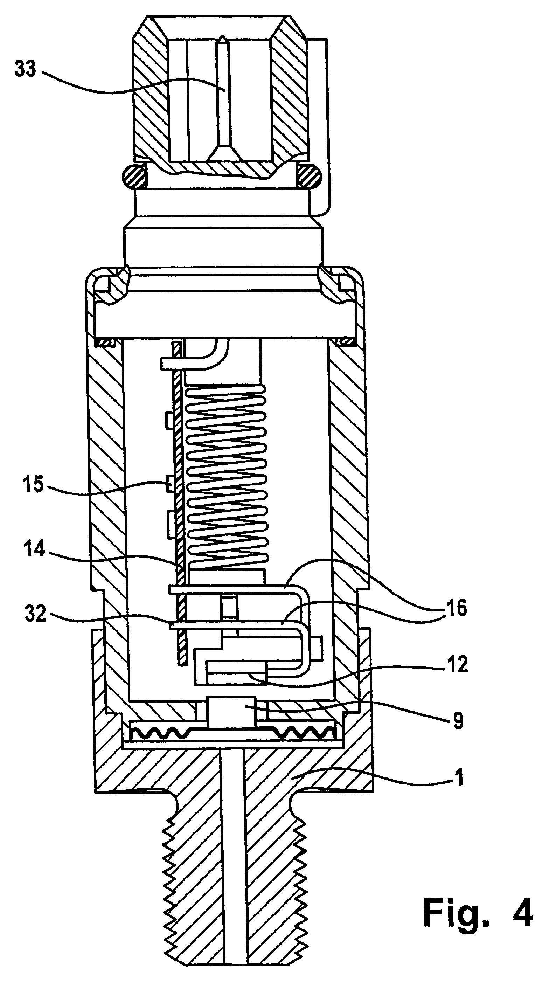

Die Figur 4 zeigt, dass zur Kontaktierung des Hall-Elementes 12 eine Leiterplatte 14 vorgesehen werden kann, die elektronische Bauteile 15 tragen kann. Sie kann flexibel (Flexleiterplatte) oder starr ausgebildet sein. Zu der Leiterplatte 14 führen die als Leiter ausgebildeten Anschlusspins 16 des Hall-Elementes 12.

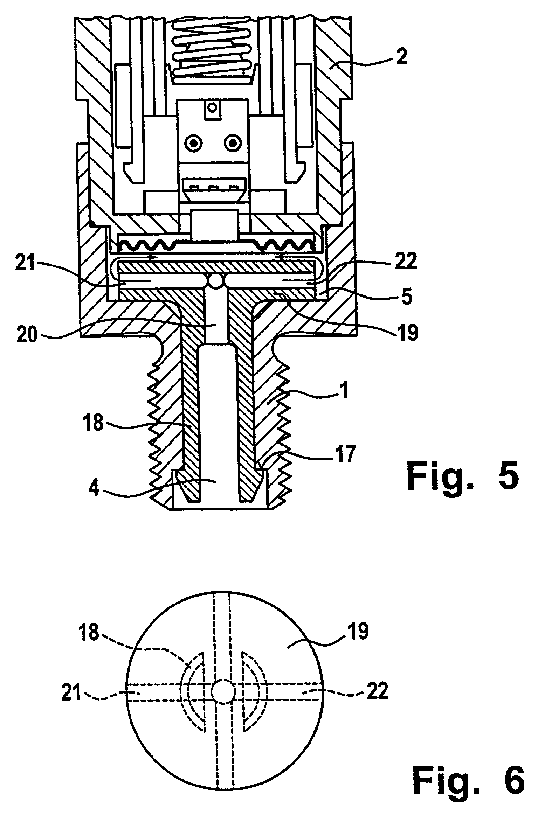

Bei der Ausführungsform nach Figur 5 ist die Druckbohrung 4 im Sockel 1 wesentlich größer ausgeführt als bei den vorangegangenen Ausführungsformen und weist eine Abstufung 17 auf, welche von Rastnasen 18 einer Prallplatte 19 hintergriffen wird. Diese Prallplatte 19 hat ein koaxiales Sackloch 20, in welches radial nach außen führende Bohrungen 21, 22 münden. Diese Bohrungen 21, 22 verbinden das Sackloch 20 innerhalb des Druckraumes 5 mit dem Druckraum 5, in welchen sie auf der Mantelfläche der Prallplatte 19 münden.

Die Figur 6 zeigt die Prallplatte 19 als Einzelteil. Gestrichelt sind die beiden radialen Bohrungen 21, 22 und zwei weitere, nicht positionierte Bohrungen zu erkennen. Weiterhin sind gestrichelt die Rastnasen 18 dargestellt.

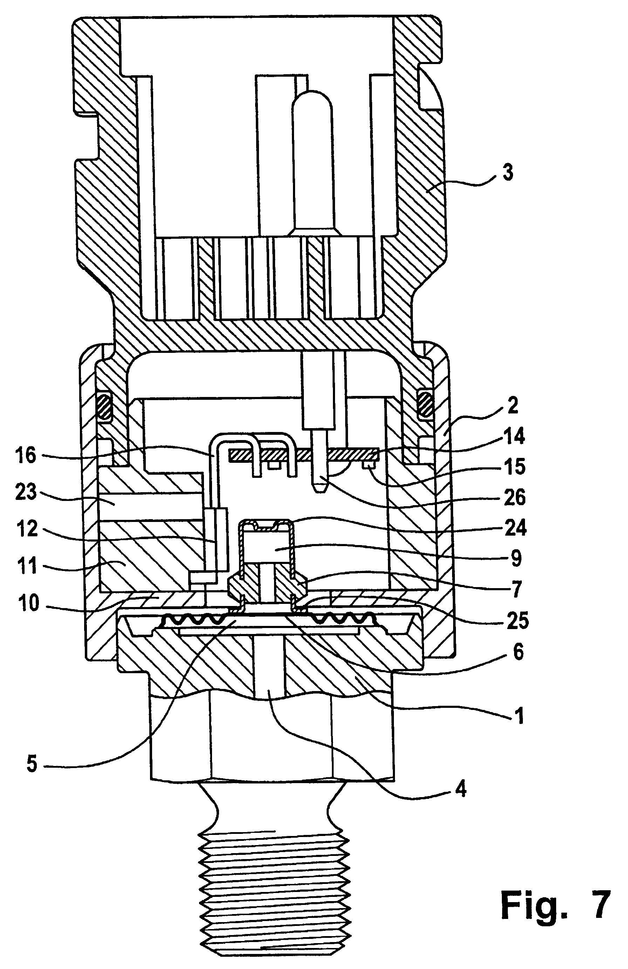

Bei der Ausführungsform nach Figur 7 ist der untere Aufbau des Drucksensors analog wie in Figur 1 gestaltet. Der Sockel 1 hat eine koaxiale Druckbohrung 4, die in einen Druckraum 5 führt, der nach oben hin durch eine Membran 6 abgeschlossen ist. Koaxial auf der Membran 6 ist ein Abstandshalter 7 befestigt, auf dem an seiner oberen Seite ein Permanentmagnet 9 eingesetzt ist. Die Hülse 2 hat mit geringem Abstand zur Membran 6 einen nach innen gerichteten Flansch 10, auf welchem von oben her ein mit einer Querbohrung 23 versehener Träger 11 ruht. Dieser Träger 11 haltert mit geringem Abstand zu dem Permanentmagneten 9 das Hall-Element 12. Eine Niederhaltefeder ist hier nicht vorgesehen, vielmehr ist der Permanentmagnet 9 zusammen mit dem Abstandshalter 7 in einem dünnwandigen Metalltopf 24 mit umlaufendem Bund 25 eingebettet und wird als vorgefertigtes Bauteil direkt auf der Membran 6 aufgeklebt oder aufgeschweißt. Eine endgültige Fixierung des Hall-Elements 12 nach der Justage am magnetischen Nullpunkt ist durch die Querbohrung 23 hindurch mittels eines Klebepunktes möglich. Gelangt durch die Druckbohrung 4 Druck in den Druckraum 5, dann wölbt sich die Membran 6 nach oben und hebt den Abstandshalter 7 mit dem Permanentmagnet 9 an. Das führt zu einer Magnetfeldänderung am Hall-Element 12, so dass dieses ein der Änderung des Druckes entsprechendes elektrisches Signal erzeugen kann.

Zur Kontaktierung des Hall-Elementes 12 führen Leiter 16 zu der Leiterplatte 14, die hier im oberen Teil des Drucksensors parallel zur Membran 6 angeordnet ist. Die Leiterplatte 14 ist hier als starre Leiterplatte ausgebildet und trägt elektronische Bauteile 15. Sie weist weiterhin einen elektrischen Anschluss in Form eines Kontaktstiftes 26 auf, der nach außen in den Kontaktteil 3 führt.

Durch die beschriebene Montage des ein Hall-Element enthaltenden Drucksensor wird durch die Einstellung der Lage des Hall-Elementes im Magnetfeld des Permanentmagneten die an sich nicht lineare Funktion der magnetischen Feldstärke über den Abstand zu einem Magneten linearisiert. Durch die Programmierung lassen sich Korrekturgrößen einstellen, sowie eine definierte Kennlinie festlegen.

## Patentansprüche

1. Drucksensor mit einem Sockel, welcher einen Druckdurchlass aufweist, der zu einem von einer Membran versperrten Druckraum führt, wobei ein ortsfest gehaltener magnetfeldempfindlicher Detektor im Magnetfeld eines auf der Membran gehaltenen Permanentmagneten angeordnet ist und der Permanentmagnet durch eine druckabhängige Verformung der Membran relativ zum magnetfeldempfindlichen Detektor beweglich ist und der magnetfeldempfindliche Detektor in Abhängigkeit einer durch die Verformung veränderlichen Lage des Magneten zum magnetfeldempfindlichen Detektor ein Ausgangssignal abgibt, **dadurch gekennzeichnet**, dass eine Ausgangslage des magnetfeldempfindlichen Detektors (12) zum Permanentmagneten (9) so eingestellt ist, dass das Ausgangssignal des magnetfeldempfindlichen Detektors (12) sich linear mit dem an der Membran (6) angreifenden Druck ändert.

2. Drucksensor nach Anspruch 1, **dadurch gekennzeichnet**, dass der magnetfeldempfindliche Detektor (12) an einer ein Gehäuse des Drucksensors bildenden Hülse (2) befestigt ist und die Hülse (2) und der den Permanentmagneten (9) tragende Sockel (1) zum Verbinden in einer der Ausgangslage von magnetfeldempfindlichen Detektor (12) und Permanentmagneten (9) entsprechenden Position ausgebildet sind, welche sich bei einer von dem Ausgangssignal des magnetfeldempfindlichen Detektors (12) abhängigen Justage zwischen Hülse (2) und Sockel (1) ergibt.

3. Drucksensor nach Anspruch 2, **dadurch gekennzeichnet**, dass die Hülse (2) und der Sockel (1) in der Position verbindbar sind, in welcher das Ausgangssignal des magnetfeldempfindlichen Detektors (12) dessen Anordnung im magnetischen Nullpunkt des Magnetfeldes des Permanentmagneten (9) anzeigt.

4. Drucksensor nach Anspruch 2 oder 3, **dadurch gekennzeichnet**, dass das Ausgangssignal des magnetfeldempfindlichen Detektors (12) bei einer druckbeaufschlagten Membran (9) bestimmt wird, wobei der an der Membran (6) angreifende Druck diese um annähernd ihren halben Hub auslenkt.

5. Drucksensor nach Anspruch 2 oder 3, **dadurch gekennzeichnet**, dass das Ausgangssignal des magnetfeldempfindlichen Detektors (12) im drucklosen Zustand der Membran (6) bestimmt wird.

6. Drucksensor nach Anspruch 2, **dadurch gekennzeichnet**, dass der magnetfeldempfindliche Detektor (12) seitlich zu dem Permanentmagneten (9) auf einem Träger (11) angeordnet ist, welcher sich auf einem nach innen gerichteten Flansch (10) der Hülse (2) abstützt.

7. Drucksensor nach Anspruch 6, **dadurch gekennzeichnet**, dass der Flansch (10) mit einem den maximalen Hub der Membran (6) begrenzenden Abstand auf der dem Druckraum abgewandten Seite über die Membran (6) ragt.

8. Drucksensor nach zumindest einem der vorangehenden Ansprüche, **dadurch gekennzeichnet**, dass der Träger (11) durch eine Niederhaltefeder (13) in Anlage mit dem Flansch (10) gehalten ist.

9. Drucksensor nach Anspruch 8, **dadurch gekennzeichnet**, dass die Niederhaltefeder (13) eine Druckfeder ist, welche einerseits auf dem Träger (11), andererseits gegen ein die Hülse (2) am dem Sockel (1) gegenüberliegenden Ende verschließendes Kontaktteil (3) abgestützt ist.

10. Drucksensor nach zumindest einem der vorangehenden Ansprüche, **dadurch gekennzeichnet**, dass der Permanentmagnet (9) auf einem Abstandshalter (7) angeordnet ist, welcher mit einer Seite auf der Membran (6) befestigt ist und auf seiner anderen Seite eine Aufnahme (8) für den Permanentmagneten (9) hat.

11. Drucksensor nach zumindest einem der vorangehenden Ansprüche, **dadurch gekennzeichnet**, dass der magnetfeldempfindliche Detektor (12) koaxial zu dem Permanentmagneten (9) in dem Träger (11) angeordnet ist.

12. Drucksensor nach zumindest einem der vorangehenden Ansprüche, **dadurch gekennzeichnet**, dass in dem Druckraum (5) zwischen der Membran (6) und einer in den Druckraum (5) führenden Druckbohrung (4) eine Prallplatte (19) angeordnet ist.

13. Drucksensor nach Anspruch 12, **dadurch gekennzeichnet**, dass die Prallplatte (19) mit Rastnasen (18) in der Druckbohrung (4) des Sockels (1) gehalten ist.

14. Drucksensor nach den Ansprüchen 12 oder 13, **dadurch gekennzeichnet**, dass die Prallplatte (19) ein zur Druckbohrung (4) hin offenes koaxiales Sackloch (20) hat, welches mit radialen Bohrungen (21, 22) in Verbindung steht, die von dem Sackloch (20) zur Mantelfläche der Prallplatte (19) führen und radial in den Druckraum (5) münden.

15. Drucksensor nach den Ansprüchen 1 bis 14, **dadurch gekennzeichnet**, dass der Drucksensor mit einer mit der ersten Membran (6) verbundenen zweiten Membran und einen zu evakuierenden Innenraum als Absolutdrucksensor gestaltet ist.

16. Drucksensor nach Anspruch 1 oder 2, **dadurch gekennzeichnet**, dass das Ausgangssignal des magnetfeldempfindlichen Detektors (12) mit Hilfe einer im Drucksensor angeordneten programmierbaren Signalaufbereitungsschaltung (27) abgleichbar ist.

17. Drucksensor nach Anspruch 16 **dadurch gekennzeichnet**, dass die programmierbare Signalaufbereitungsschaltung (27) im magnetfeldempfindlichen Detektor (12) selbst angeordnet ist.

18. Drucksensor nach Anspruch 17, **dadurch gekennzeichnet**, dass ein mit der Signalaufbereitungsschaltung (27) verbundener Programmiereingang (32) des magnetfeldempfindlichen Detektors (12) mit einem in dem Kontaktteil (3) ausgebildeten Ausgangsanschluß (33) des Drucksensors zum Abgleich des magnetfeldempfindlichen Detektors (12) verbunden ist.

19. Drucksensor nach Anspruch 18, **dadurch gekennzeichnet**, dass zur Kontaktierung des Programmiereinganges (32) des magnetfeldempfindlichen Detektors (12) mit dem Ausgangsanschluß eine Leiterplatte (14), ein Draht oder ein Leadframe vorgesehen ist.

20. Drucksensor nach Anspruche 16 oder 18, **dadurch gekennzeichnet**, dass der Abgleich des magnetfeldempfindlichen Detektors (12) durch eine Pulsweitenmodulation der den magnetfeldempfindlichen Detektor (12) versorgenden Betriebsspannung (U_{B}) erfolgt.

21. Drucksensor nach Anspruch 20, **dadurch gekennzeichnet**, dass der Abgleich durch eine Voreinstellung erfolgt, welche in einem mit der Signalaufbereitungsschaltung (27) verbundenen nichtflüchtigen Speicher (28) ablegbar ist.

22. Drucksensor nach Anspruch 16 oder 18, **dadurch gekennzeichnet**, dass der Masseanschluss (33) des Druckgebers als Ausgangsanschluß zum Abgleich des magnetfeldempfindlichen Detektors (12) genutzt wird.

23. Drucksensor nach Anspruch 16 oder 18, **dadurch gekennzeichnet**, dass der Abgleich des magnetfeldempfindlichen Detektors (12) über den digitalen Signalausgangsanschluss des Drucksensors erfolgt, welcher über eine Datenleitung (30) mit der Signalaufbereitungsschaltung (27) verbunden ist.
